# EUROPEAN PATENT SPECIFICATION

(11) **EP 0 301 721 B1**
(45) Date of publication and mention of the grant of the patent: **06.10.1993**
(21) Application number: 88306190.5
(22) Date of filing: 07.07.1988
(51) Int. Cl.: H01R 13/631, H01R 23/72

(54) **Line replaceable connector assembly for use with printed circuit boards**
Leitungsersatzsteckverbindungszusammenbau für Verwendung mit gedruckten Schaltungskarten
Assemblage d'un connecteur de substitution de ligne en utilisation avec des cartes de circuit imprimé

(30) Priority: 28.07.1987 US 78944
(43) Date of publication of application: 01.02.1989
(73) Proprietor: THE WHITAKER CORPORATION, Wilmington, Delaware 19808 (US)
(72) Inventor: Norton, Jeffrey Mark, Lebanon Pennsylvania 14072 (US); Rudy, William Jesse, Jr., Annville Pennsylvania 17003 (US); Paukovits, Edward John, Jr., Hershey Pennsylvania 17033 (US); Shaffer, Howard Richard, Millersburg Pennsylvania 17061 (US)
(74) Representative: Warren, Keith Stanley

(56) References cited:
- FR-A- 2 127 328
- GB-A- 1 467 382
- US-A- 4 715 829

## Description

The present invention relates to the field of electrical connectors, and more particularly to connectors for interconnecting a line replaceable module (LRM) to a mother circuit panel.

Especially in the aircraft industry, it is becoming desirable that electronic control units, or "black boxes," each comprise a housing containing essentially a single circuit panel or mother board to which are electrically connectable a plurality of line replaceable modules on one surface and shipboard electrical systems on the other. Each line replaceable module, or LRM, performs a control or sensing or recording function and is itself essentially a circuit card or daughter board loaded with various electrical and electronic components. Such circuit card of choice evolves from very high speed integrated circuitry, or VHSIC, technology and is intended to be secured within a very durable, rugged, environmentally sealed metal housing. Therefore, for such a loaded circuit card to be contained entirely within a sealed housing an electrical connector is necessary to provide a means for electrically interfacing with a corresponding electrical connector mounted on the mother board. Such a daughter board connector must be secured to an edge of the daughter board (or plurality of daughter boards) at an end of the housing, and must itself be environmentally sealed about its electrical contacts and about its peripheral joint with the LRM housing. To be compatible with a densely packed VHSIC card or cards such a connector must have an array of contacts whose contact sections are engageable with closely spaced circuit paths of the cards, such as paths on 0.025 inch centerlines along an edge of the panel.

Such a high density connector for circuit path spaced 0.050 or 0.025 inches apart is disclosed in U.S. Patent No. 4,715,829, wherein an array of contact terminals have long arcuate cantilever beam contact sections which are engaged with and electrically connected to the circuit paths of a panel. The terminals are secured in respective passageways of one of the connector housing modules and include box receptacle contact sections within portions of the passageways extending inwardly from a mating face for mating with corresponding pin contact sections of a mating connector. The housing includes a metal shell therearound for physical protection of the housing modules and also for the protection from electromagnetic interference (EMI). The connector assembly is adapted to be mounted to a metal plate or heat sink on both sides of which are secured circuit cards bonded thereto by known heat conductive, heat resistant adhesive material, and which is inserted between pairs of mounting ears at opposite ends of the connector assembly; roll pins are then inserted through aligned bushings in each pair of ears and through the heat sink in a manner which allows the heat sink to float incrementally. While the cantilever contact beams of the first connector are arranged in two opposed rows and are spaced at 0.050 or 0.025 inches to correspond to the circuit path spacing on the surface of a respective circuit card, the box receptacle contact sections of the terminals are arranged in staggered fashion in four rows to accommodate the size of the box receptacle contact sections; the box receptacle contact section is disclosed in U.S. Patent No. 3,404,367. The mating connector includes pin contact terminals which have pin contact sections extending outwardly from one face of a housing within a metal shroud of the connector and are matable with the respective box receptacle contact sections of the first connector. The pin contact terminals have pin contact sections extending outwardly from the connector housing on the other side, to be inserted into holes of a printed circuit board or the like and electrically connected thereto, which holes may have a different pattern and spacing than the pattern and spacing of the contact sections of the mating pairs of terminals of the mating connectors. The mating connectors also have keying and polarizing features.

It is desirable to provide a mating connector assembly for electrically interconnecting circuit cards having circuit paths on 0.025 inch centerlines, to a mother board having circuit means on like or different spacing and pattern.

It is also desirable to provide a connector for an LRM which is firmly secured thereto in a manner which includes means for sealing engagement between the dielectric housing means of the connector and the metal cover means thereof, where the housing means is adapted to float incrementally therewithin in a transverse direction with respect to the connector mating face.

It is further desirable to provide such an LRM connector with means to seal environmentally around the contact sections of its terminals which are exposed to be electrically engaged by corresponding contact sections of terminals of a mating connector.

It is further desirable to provide means for aligning the LRM connector incrementally into an accurate orientation with respect to the mating connector fixed in position on a mother board for the arrays of corresponding pairs of contact sections of the two connectors to mate, while the LRM itself is not incrementally alignable.

It is yet further desirable for the connector assembly to provide means for transmitting electrical power from a power source into the LRM to provide power, for instance, to components assembled to the circuit cards within the LRM assembly, to provide means for coaxial signal transmission, and to provide means for transmitting optical signals into and out from the LRM assembly.

It is still further desirable to provide a mother board connector assembly matable with the LRM connector and providing for power, coaxial signal and optical signal interconnection with the LRM assembly, and which includes a metal shroud therearound grounded to the mother board and together with appropriate grounding engagement with the metal housing of the LRM assembly provides EMI and ESD shielding of the entire interconnection between the LRM assembly with the mother board connector.

It is desirable to provide a method for securing contact sections of an LRM connector to surface contact sections of VHSIC circuit cards within the LRM assembly on close spacing such as on centers spaced 0.025 inches apart, without requiring tooling for alignment of the contact sections of the connector individually with the corresponding circuit card contact sections prior to joining the corresponding contact sections together in a secure mechanical and electrical connection.

It is also desirable, within both the interior of the LRM assembly and the interior of a corresponding black box into which it is to be removably inserted for in-service use, to provide for power, coaxial and optical fiber cable means to extend from the LRM connector assembly and mother board connector assembly respectively.

The present invention consists in a connector assembly as defined in claim 1.

A first embodiment of the present invention includes an LRM connector having rows of terminals for engaging the closely spaced circuit paths of VHSIC circuit cards on side surfaces of the end of heat sink means in the LRM, and providing electrical connection thereof to corresponding circuits of a mother board within a black box by way of a mating connector secured on the mother board. Because the mother board and its connectors are rigidly secured in the black box, and each LRM assembly is inserted into the black box along guide channels which are fixed in position in the black box, the LRM connector and its manner of mounting to the LRM permit incremental movement in a transverse direction with respect to the LRM while remaining in a sealed relationship therewith to be forgiving of being initially incrementally offset with respect to the mating mother board connector. The LRM connector includes an alignment rib extending forwardly of the mating face which enters a corresponding alignment channel of the mating connector and urges the LRM connector incrementally laterally into an aligned orientation during mating, so that the corresponding pairs of terminals of the connectors are thereby properly aligned with each other to engage and mate. A seal member is disposed across the mating face of the LRM connector which seals about the pin terminal contact sections extending forwardly of the dielectric housing to mate with box receptacle contact sections of the mother board connector. The seal member also seals with the inside surface of the metal cover of the LRM assembly at the seal member periphery, and being made of an elastically deformable material the seal maintains the sealing engagement when the connector is urged incrementally to the side during connector alignment during mating.

Preferably, the terminals of the LRM connector are maintained in carrier strip form as the contact sections are secured to the circuit paths of the circuit card. Retaining the carrier strips attached to the free ends of the long cantilever beams maintains the terminal ends precisely spaced 0.025 inches apart until the contact sections at the free ends are soldered or otherwise secured to the circuit paths. Prior to the terminals being secured to the circuit cards, the terminals have dielectric insert bodies molded around body sections thereof at the other end of the long cantilever beams, forming a terminal subassembly. After joining the contact sections to the circuit paths, the carrier strips joined at the terminal ends are now removed such as by severing or by breaking of frangible links. Terminal subassemblies thus secured to the mounted circuit cards then receive the remainder of the LRM connector, which is then assembled securely to the heat sink and cover means of the LRM.

Two rows of terminals may be dedicated to each of the one-sided VHSIC circuit cards, with the terminal ends of both rows arrayed in a common row at the contact sections adjacent the card, best done by stamping and forming two carrier strips of terminals on 0.050 inch centerlines, each strip having its long cantilever beams formed slightly differently to result in inner and outer rows of pin contact sections at the other ends of the terminals. Each array of two rows has a separate insert molded to the terminals thereof, thus defining two terminal subassemblies, one for each one-sided circuit card, whether the circuit cards are mounted on opposed sides of a central metal heat sink plate between two outer cover plates as in a first embodiment, or on inner surfaces of metal plates comprising the covers and heat sink means as in the second embodiment. The carrier strips of the two rows of terminals of each array are disposed adjacent each other in the terminal subassemblies, and optionally may be welded together.

In the first embodiment, when the pair of terminal subassemblies have been secured to the circuit cards at the contact sections and the carrier strips removed, a forward connector subassembly is then secured to and around the forward ends of the terminal subassemblies. The metal covers are now secured by fasteners within the outer flange of the heat sink plate on both sides, with forward ends thereof surrounding a rearwardly extending flange of the connector shroud to which the cover members are sealingly bonded, completing the LRM assembly. The forward connector subassembly includes a forward housing member (which includes the alignment rib discussed above) and a seal member all within a metal shroud. The forward housing member and seal member have a plurality of aligned passageways through which extend the pin contact sections of the four rows of terminals. After placing the forward connector subassembly on the terminal subassemblies, the pin contact sections extend forwardly of the seal member in a four row array, and the metal shroud peripherally surrounds the pin terminal array extending beyond the forward ends of the pins. The shroud also includes an EMI spring member around its inside surface having a plurality of spring fingers to engage a metal shroud of the mother board connector after mating. The metal shroud of the LRM connector is dimensioned to be larger than the metal shroud of the mother board connector to be received thereinto to allow for slight misalignment of the LRM assembly with the mother board connector, wherein the EMI spring fingers extend inwardly far enough to electrically engage the mother board connector metal shroud even in a slightly off-center position.

The LRM connector and the mating mother board connector may have additional provision for mating connection along their mating faces of power terminals, coaxial or triaxial signal terminals and optical fiber terminals, by means of dielectric housing inserts placed within the respective metal shrouds of the two connectors which receive terminals terminated to ends of power, coaxial or triaxial signal, and optical fiber cable means respectively. Within the LRM assembly the power, coaxial signal and optical fiber cable means would be appropriately terminated to components connected to the circuit cards, while the cable means in the black box could extend past a side edge of the mother board and be connected either to the mother board or directly to shipboard systems such as to a power supply. Such inserts may be placed at one or both ends of the connector housings for the pin and box receptacle contact terminals and should have their own alignment mechanisms similar to the one described above, and the insert for the LRM connector should be placed behind the seal member. The connectors should also be provided with polarizing means, and also with keying means such as conventional mating octagonal or hexagonal key members.

In a second embodiment of the LRM connector, a pair of two row terminal subassemblies is prepared as before, with carrier strips attached to free ends of the cantilever beams. The LRM is modified to eliminate the central metal heat sink plate and to place the VHSIC cards directly on inside surfaces of the outer cover members, significantly enhancing heat dissipation and allowing for thicker cover plates for better physical protection of the LRM assembly while actually enabling a reduction in overall weight. The contact sections of each terminal subassembly are secured to the circuit cards as before, and the carrier strips removed. The forward connector subassembly of the previous embodiment may now comprise two halves joined along an abutting seam, each half secured to a respective cover plate so that a pair of cover plate/connector units are thus defined securable together by mechanical fasteners. The forward ends of the cover plate members can define the connector shroud, each with an EMI spring strip. An O-ring seal is placed within grooves around the peripheral facing edges of the two plates for effective sealing. Thus the two units can be separated for repair or even for replacement of one of the units while allowing reuse of the other unit. An additional advantage of this embodiment is that spring contact arms can be selectively secured to circuit paths of one circuit card which will engage and electrically connect with opposing spring contact arms secured to the other card, to directly interconnect paths of the two cards upon assembly of the pair of units.

Embodiments of the present invention provide a pair of mating connectors to interconnect an LRM assembly to a mother board within a black box, and LRM connector electrically connectable to a VHSIC circuit card within an LRM assembly whose circuit paths have centerlines spaced 0.025 inches apart, such an LRM connector which environmentally seals about the plurality of contact terminals matable with terminals of a mating connector, and which seals with the cover members of the LRM assembly, such a sealed LRM connector which is capable of incremental transverse movement with respect to the LRM assembly to self-align with the mother board connector upon mating, for proper alignment of their terminals, and an LRM and mating mother board connector with the capability of providing interconnecting of power, coaxial or triaxial signal and optical signal transmission means between the black box and the LRM, and providing an arrangement for such transmission means while maintaining sealing, floating and EMI shielding.

An embodiment of the present invention provides an improved LRM assembly which eliminates the central heat sink member while facilitating heat dissipation characteristics of the assembly, facilitates assembly of the connector thereto, provides for direct interconnection between circuit cards within the assembly, provides a single central space within the assembly for containing components of substantial height and for cable lengths, provides for thicker cover plates resulting in greater physical protection for the assembly while not increasing the weight of the assembly, and provides for assured sealing between the cover plates and improved EMI shielding by eliminating the separate LRM connector shroud. Embodiments of the present invention will now be described by way of example with reference to the accompanying drawings:-
FIGURE 1 illustrates a black box adapted to receive a plurality of LRM's along guide channels, one of which is exploded therefrom.
FIGURE 2 is a perspective exploded view of a first embodiment of an LRM without a connector mounted thereto.
FIGURE 3 is an enlarged perspective longitudinal section view of a first embodiment of an LRM connector of the present invention secured to circuit cards of the LRM of Figure 2 with the housing and insert in phantom and positioned to mate with a mother board connector secured to a mother board of a black box of Figure 1.
FIGURE 3A is an enlarged view of the arrangement for mounting the LRM connector to the heat sink plate of the LRM of Figures 2 and 3.
FIGURE 4 is an enlarged longitudinal section view through the pin terminal array of the LRM connector and mother board connector of Figure 3 aligned for mating.
FIGURES 5, 6 and 7 are perspective views showing the forming of the terminal subassemblies and the securing of the forward connector subassembly to the terminal subassemblies soldered to the circuit cards in a first embodiment.
FIGURES 8 and 9 are longitudinal section views of a housing insert receiving an optical fiber terminal insertably thereinto during assembly, and of corresponding optical fiber terminals mating during connector mating.
FIGURES 10 and 11 are longitudinal section views of housing inserts having respectively a coaxial signal terminal and power terminals secured therein after assembly.
FIGURE 12 is a part perspective view of a second embodiment of LRM assembly consisting of two opposing heat sink covers with a terminal subassembly exploded from one of them and terminal subassemblies of the other in phantom.
FIGURES 13 and 14 are, respectively, a longitudinal section view and part section perspective view of a mounted LRM connector of Figure 12 aligned to mate with a mother board connector of Figure 4.

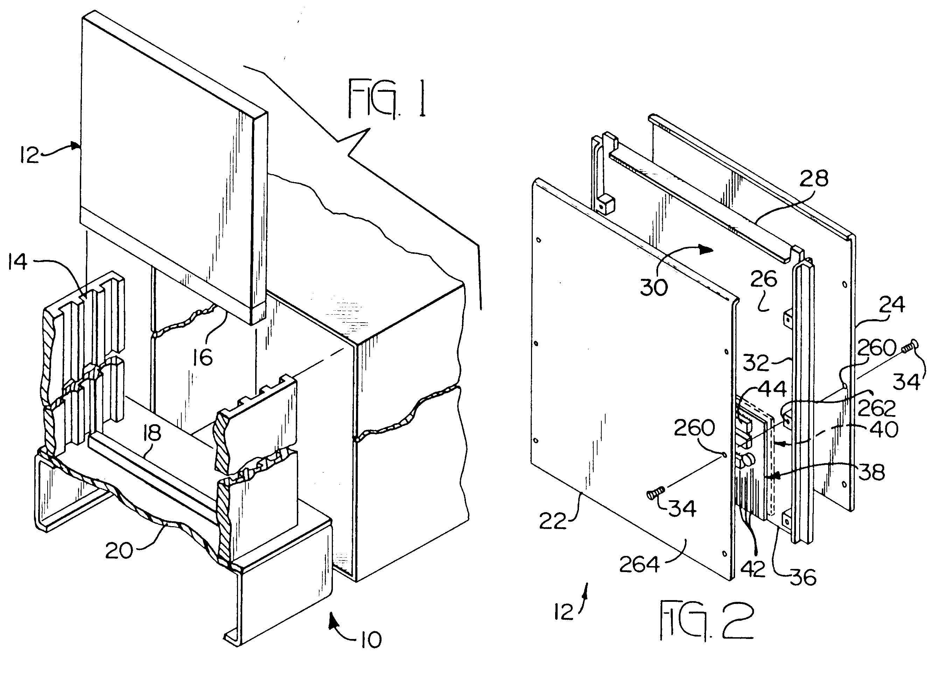

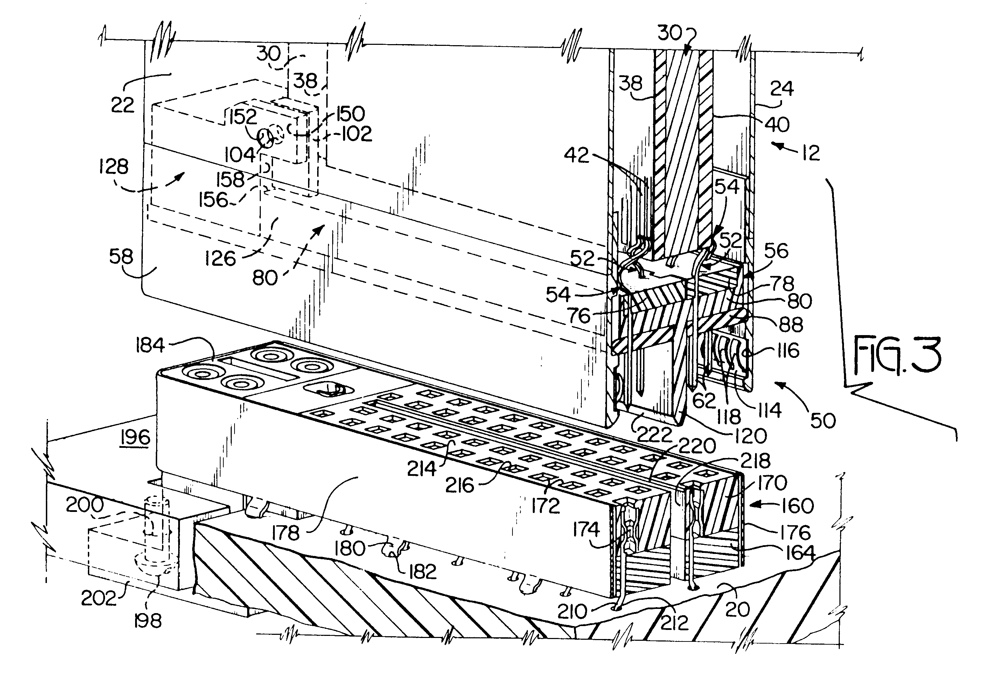

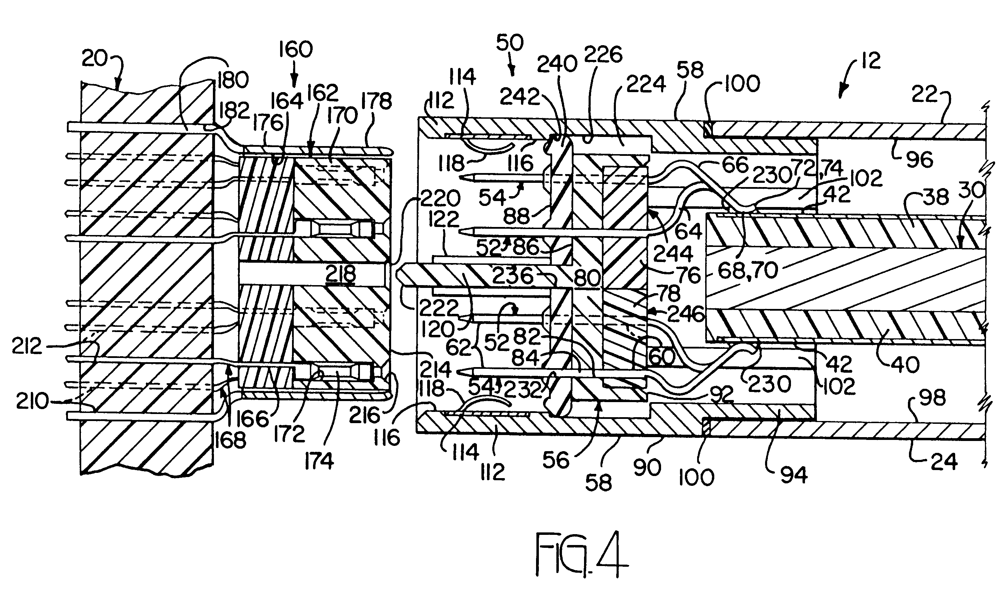

Figure 1 generally illustrates a black box 10 comprising one of a plurality of electronic control units for aircraft and the like, with a representative line replaceable module, or LRM, assembly 12 which is insertable thereinto along with like others. LRM assembly 12 is inserted along guide channels 14 so that an LRM connector 16 secured at the front end thereof mates with a corresponding electrical connector 18 mounted on a mother circuit panel 20 such as a printed circuit board to be thereby interconnected to shipboard electrical systems. LRM assembly 12, as shown in Figure 2 and under consideration by the industry, is comprised of a pair of metal cover plates 22,24 to be secured along both sides 26,28 of a centrally disposed metal heat sink plate 30, by being fastened within peripheral flange 32 of the heat sink plate by a plurality of fasteners 34 such as bolts or rivets. On side surfaces 26,28 of heat sink 30 at a front end 36 are mounted respective one-sided circuit cards 38,40. Preferably the cover plates and heat sink are anodized aluminum.

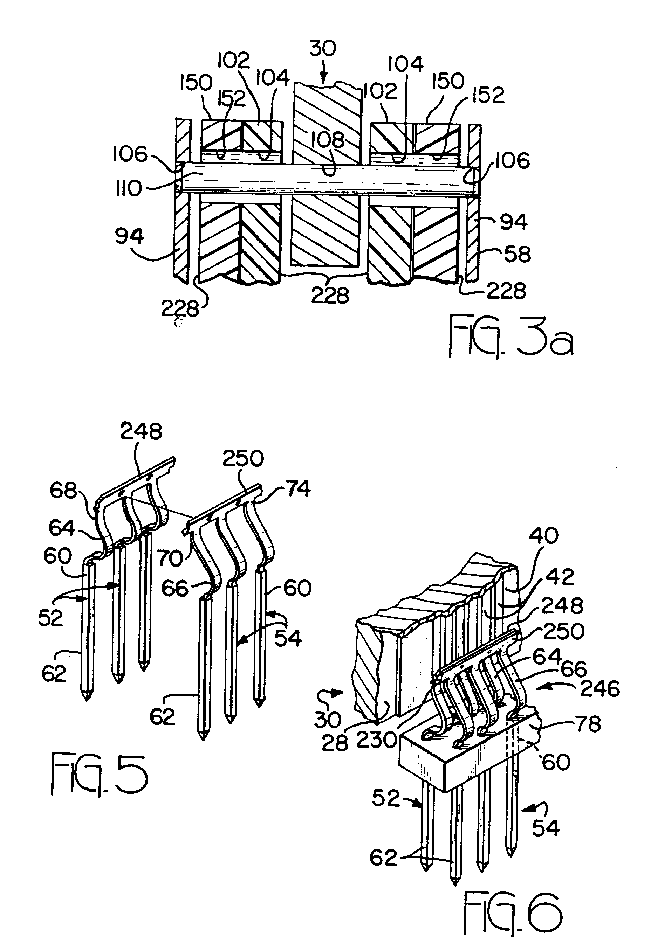

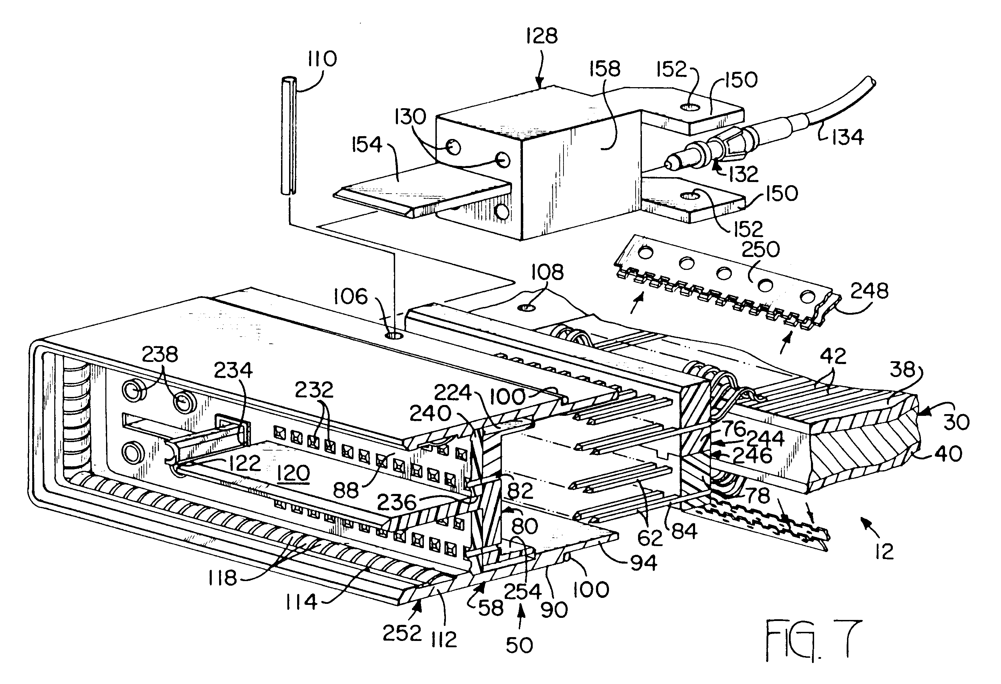

Circuit cards 38,40 such as VHSIC cards have an array of parallel circuit paths 42 each 0.010 to 0.015 inches wide on 0.025 inch centerlines extending rearwardly from a leading edge at the forward end of the LRM cover plates. To the circuit cards are mounted and electrically connected various electronic and electrical components 44 as desired, and also electrical components such as light emitting and light receiving diodes for optical fiber connection, coaxial or triaxial connectors and power terminal means, if desired. If such optional electrical components are utilized, the LRM assembly must also include cable means extending from appropriate connection with the components to the forward end of the LRM cover plates. Sufficient space must be created between the cover plates and the heat sink to accommodate the various components and cable means and also allow for terminals to be secured to circuit paths 42 of the circuit cards. At the forward end of the LRM assembly will be assembled an LRM connector, as shown in Figures 3 and 4, which includes terminals for electrical connection to circuit paths 42, and which also provides for terminals for the various optional optical fiber lines, coaxial or triaxial signal lines, and power lines.

With reference to the embodiment of Figures 3 and 4, LRM connector 50 is comprised of a plurality of contact terminals 52,54 which are secured within a housing means 56, and surrounding LRM connector 50 is an integral metal shroud 58. Terminals 52,54 have body sections 60, pin contact sections 62 forwardly thereof, and elongate arcuate cantilever beams 64,66 at their rearward ends having contact sections 68,70 at free ends 72,74 thereof for electrical connection to respective circuit paths 42 of circuit cards 38,40. Preferably housing means 56 consists of rearward blocks 76,78 molded around terminal body sections 60, and a premolded forward housing member 80 having a plurality of passageways 82 therethrough through which rearward ends 84 of pin contact sections 62 will extend after assembly. Forwardly of mating face 86 of forward housing 80 is an integral seal member 88.

Metal shroud 58 includes a rear section 90 extending rearwardly of rear face 92 of LRM connector 50 where a flange 94 of the shroud extends farther rearwardly. After complete assembly of the LRM, flange 94 will extend along inner surfaces 96,98 of LRM cover plates 22,24 and be sealed thereto such as by a bead 100 of silicone rubber sealant (Figure 4) or by conductive epoxy material. Forward housing 80 may also include several pairs of mounting ears 102 extending rearwardly therefrom alongside heat sink plate surfaces 26,28 at locations spaced laterally from all circuit cards 38,40 assembled to heat sink plate 30. With reference to Figure 3A, extending through mounting ears 102 and flange 94 of metal shroud 58 outside thereof preferably are aligned holes 104,106 which further align with corresponding holes 108 in heat sink plate 30 through all of which may be placed roll pins 110, similarly to the arrangement described in U.S. Patent No. 4,715,829. Roll pins 110 extending through mounting ears 102 provide a stop mechanism preventing axial movement of not only metal shroud 58 but also forward housing 80.

Metal shroud 58 is preferably made of electroless nickel plated aluminum and has a forward section 112 extending forwardly of mating face 86 of forward housing 80 and seal member 88 to extend beyond pin contact sections 62 of terminals 52,54 for physical protection thereof and for EMI protection of the interconnections thereof with contact sections of the mother board connector after mating of the connectors upon insertion of the LRM assembly into the black box. Preferably metal shroud forward section 112 includes an EMI spring strip 114 secured peripherally around the inside surface 116 thereof having a plurality of convex spring fingers 118 extending rearwardly and inwardly, forward of seal member 88. Such an EMI spring strip may be stamped and formed of nickel plated beryllium copper alloy.

Forward housing 80 is molded of heat resistant polyphenylene sulfide and includes an alignment rib 120 which extends farther forwardly than metal shroud forward section 112 and pin contact sections 62, in order to enter a corresponding alignment recess 218 of mother board connector 160 to align LRM connector 50 therewith. Preferably, stainless steel keys 122 are secured, as in Figure 7, in key passageways 124 of key sections 126 of forward housing 80 at ends of the array of pin contact sections 62 to provide keying in cooperation with corresponding keys in mother board connector 160 (Figure 4), to prevent mating of LRM connector 50 unintentionally with the incorrect mother board connector when LRM assembly 12 is inserted into an incorrect channel of black box 10.

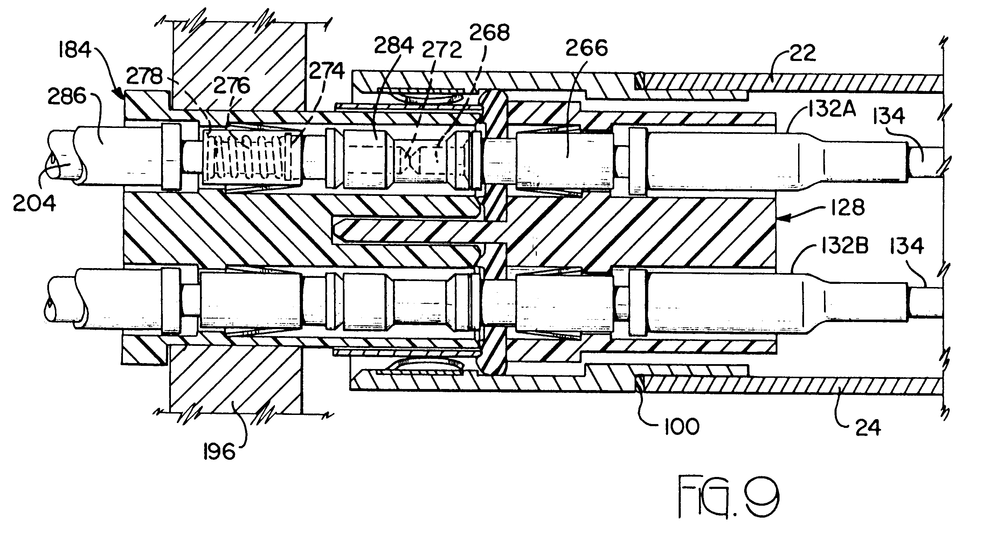

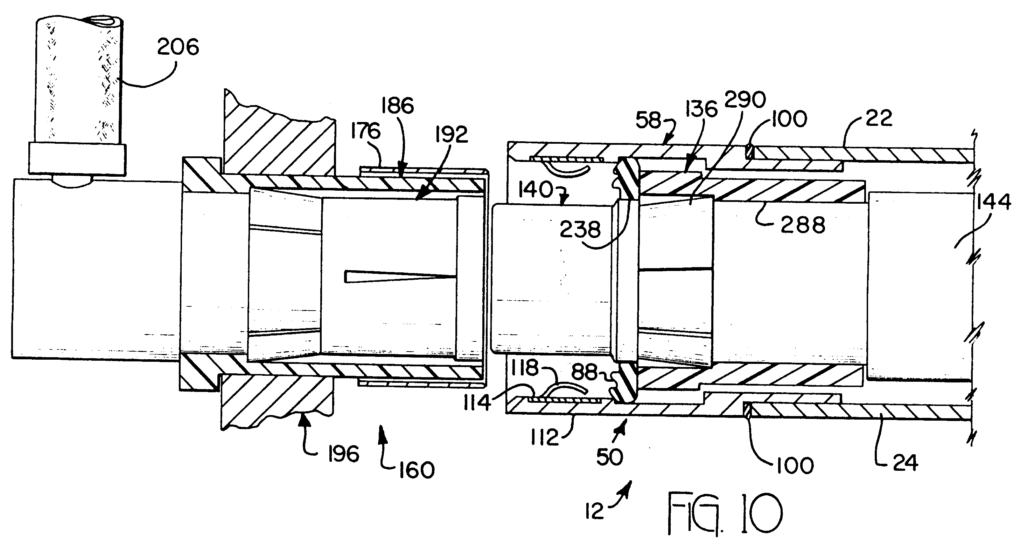

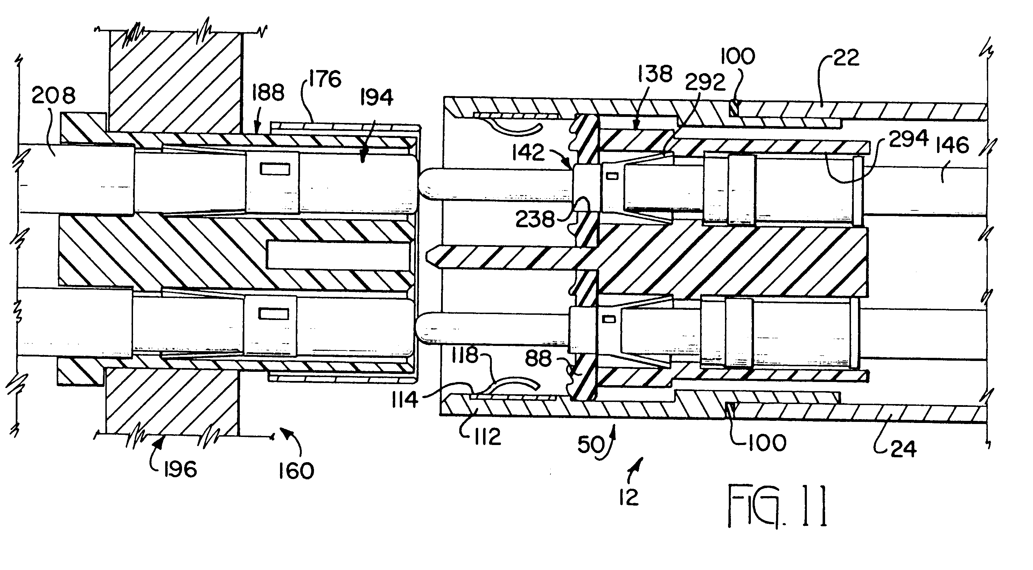

Also shown in phantom in Figure 3 and in greater detail in Figures 7 through 9, is a representative premolded housing insert 128 having terminal-receiving passageways 130 within which are securable terminal assemblies 132 for optical fiber cable means 134, if such is desired in a particular LRM assembly; housing insert 128 for optical fiber terminal assemblies 132 is shown in more particularity in Figures 8 and 9. Alternatively similar housing inserts 136,138 as are shown in Figures 10 and 11 may be used for terminals 140,142 of the coaxial cable means 144 or power cable means 146. Such a housing insert 128,136,138 is placed at an end laterally of key section 126 of forward housing 80 within metal shroud 58, and such housing inserts may be placed at both ends of forward housing 80, if desired. Housing inserts 128,136,138 may be secured to heat sink plate 30 in a manner similar to that for forward housing 80, by mounting ears 150 having holes 152 through which extend roll pins; for convenience mounting ears 102 of forward housing 80 at each end, and mounting ears 150 of each housing insert therebeside, should overlap so that their respective holes 152,104 are aligned to receive a common roll pin 110 (Figure 3A) therethrough. Each such housing insert should have a separate alignment means such as an alignment rib 120, to align with a cooperating alignment means of a corresponding housing insert 184,186,188 of mother board connector 160. Facing surfaces 156,158 of forward housing 80 and housing inserts 128,136,138 preferably are spaced a slight distance apart.

Connector assembly 160 in Figures 3 and 4 is secured in the black box to be mated with LRM connector 50; while only part of the connector assembly is actually mounted and electrically connected to the mother board 20 within the black box, it will be referred to herein as the mother board connector. Mother board connector 160 includes a housing means 162 preferably including a rear dielectric insert member 164 through which body sections 166 of terminals 168 are force fit, and dielectric forward housing member 170 having passageways 172 into which receptacle contact sections 174 of terminals 168 are secured. Mother board connector 160 includes therearound metal shroud 176 for EMI shielding upon mating of the connectors by means of engagement of outer surfaces 178 thereof by EMI spring fingers 118 of metal shroud of LRM connector 50. Metal shroud 176 is grounded such as by connection by legs 180 inserted into holes 182 of mother board 20 and electrical connection with ground path means thereof, which completes the grounding of metal shroud 176 and of LRM assembly 12.

Mother board connector 160 additionally includes as shown in Figures 8 to 11, housing inserts 184,186,188 for optical fiber, coaxial or triaxial signal and power terminals 190,192,194 to correspond with housing inserts 128,136,138 of LRM connector 50. Each housing insert is mounted to framework 196 within black box 10 beside mother board 20, such as by screws 198 extending through mounting holes 200 of mounting flanges 202 of the insert and into threaded holes of framework 196. The housing insert receives terminals 190,192,194 terminated to cable means 204,206,208 for optical fiber, coaxial or triaxial signal and power transmission respectively; this arrangement permits mother board 20 to be removed from black box 10 without affecting housing inserts 184,186,188 or cable means 204,206,208. Housing inserts 184,186,188 are contained within integral metal shroud 176, although not secured to nor fit tightly against the metal shroud or rear or forward housing members 164,170.

Pin contact sections 210 at rearward ends of terminals 168 of mother board connector 160 are inserted through holes 212 of mother board 20 and secured and electrically connected to circuit paths thereof such as by soldering. Mating face 214 of forward housing 170 includes lead-ins 216 to passageways 172 to guide respective pin contact sections 62 of LRM connector 50 upon mating. Receptacle contact sections 174 are preferably the box type disclosed in U.S. Patent No. 3,404,367. Terminals 168 may be stamped and formed from beryllium copper alloy with pin contact sections 210 plated with tin/lead for soldering to circuit paths of mother board 20, while the contact sections within the box receptacle sections may be plated gold over nickel.

Alignment recess 218 of forward housing 170 preferably includes chamfered corners 220 which cooperate with tapered forward edges 222 of alignment rib 154 for lead-in benefits upon its entering into recess 218 during connector mating; tapered edges 220,222 are bearing surfaces to urge rib 120 incrementally laterally in the transverse plate to become accurately aligned with recess 218. Each housing insert has a separate alignment means which may also be a recess similar to recess 218. This alignment process urges the terminal-containing housings of the LRM connector incrementally transversely to assure that pin contact sections 62 thereof and the optical fiber plug terminal assemblies 132, coaxial 140 or triaxial and power 142 terminals thereof are aligned with respective corresponding terminals of the mother board connector for proper mating engagement therewith upon full mating of the connectors.

In accordance with the present invention, LRM connector 50 is secured to LRM assembly 12 in a manner permitting incremental movement or floating transversely with respect thereto. More precisely, housing inserts 128,136,138 float within metal shroud 58 separately from forward housing 80, responsive to the position and orientation of corresponding housing inserts 184,186,188 of mother board connector 160. With reference to Figure 4, such incremental float is permitted by means of gap or spacing 224 peripherally around forward housing 80 and housing inserts 128,136,138 provided by peripheral recess 226 into inside surface 116 of metal shroud 58. Also, referring to Figure 3A, it is preferred that roll pin holes 104,152 through mounting ears 102,150 of forward housing 80 and housing inserts 128,136,138 be slightly larger than the diameter of roll pins 110 therein to permit at least sideways incremental movement of mounting ears 104,150 with respect to heat sink plate 30 and metal shroud 58, and also that mounting ear surfaces 228 be formed such that they are spaced slightly from heat sink plate 30 and from metal shroud 58. Further, consistent with the ability of the LRM connector of the present invention to be moved incrementally, elongate cantilever beams 64,66 of terminals 52,54 are resilient enough to flex and not transmit undue stress on the solder joints 230 with the circuit paths 42. The inside dimension of metal shroud 58 is selected to be larger than the outer dimension of metal shroud 176 to permit for slight misalignment of the metal shrouds upon mating engagement, due to each being mounted possibly off-center with respect to each other, and EMI spring fingers 118 are adapted to engage metal shroud 176 for grounding peripherally therearound in such a situation. Terminals 52,54 of LRM connector 50 and terminals 168 of mother board connector 160 are preferably formed having reduced length over conventional such terminals, to maintain a minimal distance between the connections with circuit cards 38,40 and mother board 20, to reduce electrical impedances and to improve transmission of electrical signals therealong.

Seal member 88 is preferably premolded as an integral article from elastomeric material such as preferably heat resistant fluorosilicone rubber with apertures 232 through which pin contact sections 62 will extend; apertures 234 through which keys 122 will extend; aperture 236 through which alignment rib 154 will extend; and apertures 238 through which forward sections of optical fiber terminal assemblies, coaxial 140 or triaxial signal terminals, or power terminals 142 will extend. A preferably continuous rounded peripheral edge section 240 sealingly engages metal shroud 58 under compression when assembled therewithin behind rearwardly facing shoulder 242 thereof defining the forward end of peripheral recess 226. With seal member 88 being made of elastomeric material, sealing engagement is maintained with metal shroud 58 peripherally therearound both before and after any incremental movement of forward housing 80 or either of the two housing inserts contained in LRM connector 50 or all of them, during alignment upon mating even through the local compressive forces on portions of rounded seal edge section 240 are slightly modified.

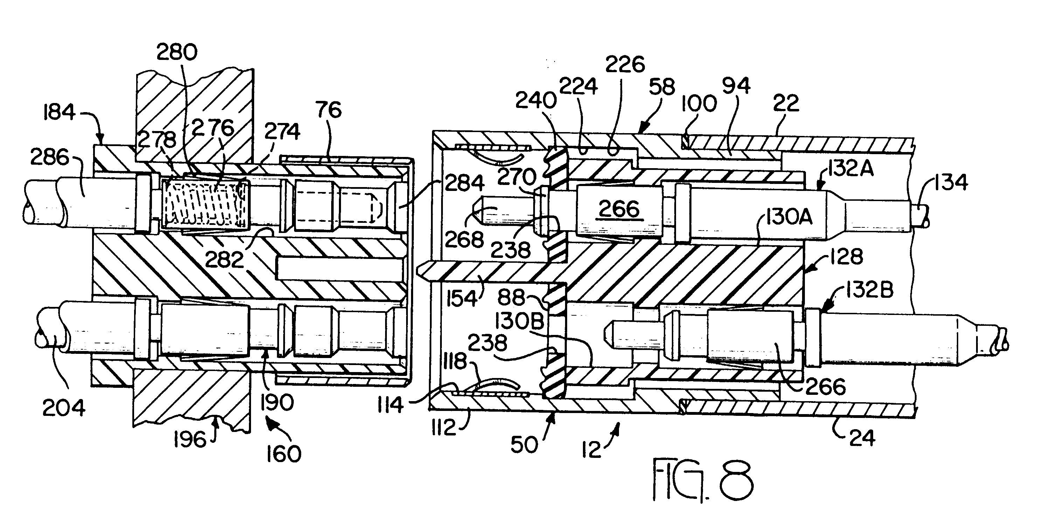

Referring especially to Figures 5 and 6, terminals 52,54 of LRM connector 50 are preferably stamped and formed of phosphor bronze alloy with contact sections 68,70 plated gold over nickel. Elongate arcuate cantilever beams 65,66 extend rearwardly to free ends 72,74 from body sections 60, and contact sections 68,70 are disposed on card-proximate surfaces of free ends 72,74. Contact sections 68,70 are preferably convex relative to circuit paths 42 with which they will be joined, to facilitate filleting during soldering to circuit paths 42 which is known to result in the formation of strong joints 230. Terminals 52,54 are disposed in two arrays, one for each side 26,28 of heat sink plate 30 which may contain one or two circuit cards 38,40. Prior to contact sections 68,70 being soldered to the circuit paths 42, each of the two arrays is insert molded in a separate dielectric housing block 76,78 such as of polyphenylene sulfide, thus forming a pair of terminal subassemblies 244,246 which greatly facilitates handling and assembly. Body sections 60 of terminals 52,54 within blocks 76,78 are arranged in inner and outer rows so that pin contact sections 62 forwardly thereof are disposed in inner and outer rows to mate with a corresponding pattern of box receptacle contact sections 174 of mother board connector 160; appropriate tooling holds the pin contact sections 62 precisely in position and alignment during molding, as is known.

To assure that contact sections 68,70 on free ends 72,74 of terminals 52,54 of each array are maintained in a common plane to be joined to corresponding circuit paths 42 of circuit cards 38,40, and more importantly to assure that free ends 72,74 are fixed in precise centerline spacing 0.025 inches apart to correspond to the circuit path spacing, it is preferred that free ends 72,74 of terminals 52,54 remain joined to the carrier strip 248 or 250 from the metal strip which they were stamped, until after soldering to circuit paths 42 at which time carrier strips 248,250 are carefully severed such as by snipping with an appropriate tool (not shown) or by being broken off at frangible links.

It is preferred that each row of terminals 52 and 54 be stamped on a separate carrier strip 248 or 250 with centerlines of free ends 72 and 74 spaced 0.050 inches apart, because the shapes of the arcuate cantilever beams 64 and 66 are slightly different and the length thereof is different between the inner and outer row terminals 52,54. Forming of the terminal subassemblies holding the terminals in a two row array while the free ends are joined to the carrier strips, maintains alternating free ends 72,74 spaced on centerlines 0.025 inches apart. The two carrier strips 248 and 250 may be optionally bonded together such as by welding to further assure such spacing. By maintaining the carrier strips on the free ends of the terminals until soldering, the need is eliminated for expensive tooling otherwise needed to be applied to such a connector to bring the free ends into proper alignment and spacing when soldering is to be performed.

Referring now to Figure 7, terminal subassemblies 244,246 have been secured to heat sink plate 30 by contact sections 68,70 being soldered to circuit paths 42; the structure so formed should be held in appropriate tooling (not shown) during the remaining assembly procedure. Terminal subassemblies 244,246 formed by molding blocks 76,78 to the terminal arrays maintain the pin contact sections 62 in desired spacing and alignment to facilitate securing forward housing 80 thereto. Preferably forward housing 80 and seal member 88 are mounted within metal shroud 58 already having EMI spring strip 114 secured therein, to form a forward connector subassembly 252. Forward connector subassembly 252 is moved along pin contact sections 62 after contact sections 68,70 have been soldered to circuit paths 42 until blocks 76,78 of terminal subassemblies 244,246 are fully seated within large cavity 254 of forward housing 80 and holes 106,104 through rearward flange 94 of metal shroud 58 and mounting ears 102 are aligned with holes 108 through heat sink plate 30 and roll pins 110 are inserted through the aligned holes. A bead 100 of silicone rubber sealant, or of conductive epoxy, is disposed around rearward flange 94. Finally, as seen in Figure 2, cover plates 22,24 may then be placed in position with the plurality of holes 260 aligned with holes 262 through heat sink plate 30 and forward ends 264 thereof overlapping rearward flange 94 of metal shroud 58, and are fastened to heat sink plate 30 and now-assembled LRM connector 50 such as with bolts or rivets 34, completing the LRM assembly 12.

Figure 8 shows housing insert 128 having passageways 130 for optical fiber terminal assemblies 132, which are inserted and secured therein when forward connector subassembly 252 is being secured to the terminal subassemblies 244,246 and heat sink plate 30 (Figure 7). Housing insert 128 may be of plastic such as polyphenylene sulfide or it may be metal. A first optical fiber terminal assembly 132A disposed in passageway 130A has been secured to an end of a length of optical fiber cable 134, the other end of which has been appropriately secured in an optically mated connection with an appropriate photoelectric device such as a light emitting or a light receiving diode (not shown), as is known. A second such terminal assembly 132B is being inserted into corresponding passageway 130B of housing insert 128 and secured therein by retention clip 266. Plug terminal 268 of terminal assembly 132A extends through aperture 238 of seal member 88 and includes annular collar 270 disposed therealong to be located in front of seal member 88, stretching the seal aperture temporarily until it passes therethrough. It is desired that the mother board connector 160, mating optical fiber terminal assembly 190 be mounted in housing insert 184 in such a way that plug terminal 272 and the end portion of the optical fiber transmission member secured within it, is able to be moved rearwardly with annular collar 274 thereof engaging against compression spring 276 all shown in phantom. Compression spring 276 is compressed and is stopped by a flange 278 of retention clip 280 secured in passageway 282, upon mating of plug terminal 272 with corresponding optical fiber plug terminal 268 in the corresponding housing insert of LRM connector 50. This spring biasing of the mating plug terminals together within an appropriate alignment sleeve 284 assures that the optical end faces of the mated optical fiber transmission members abut without a gap; the alignment sleeve fitting firmly around both plug terminals 272,268 assures that the mating plug terminals and the end lengths of optical fibers therewithin are precisely axially aligned; both assure optical signal transmission between the optical fiber transmission members without loss of optical signal. Regarding cable means 204 for optical fiber terminal assembly 190 in mother board connector 160, it is preferred to assure a gradual bending of the cable means which contains a delicate fiber therewithin, to prevent breaking but also to protect against signal loss due to too sharp a bend; therefore, cable means 204 should be contained in metal tube 286 extending from the rearward end of terminal assembly 190 and curving to gradually bend the cable about a 90 degree angle to eventually extend parallel to the bottom of the black box.

Figure 10 shows coaxial signal terminal 140 terminated to an end of a length of coaxial cable 144 and secured within passageway 288 of housing insert 138 by a retention clip 290, and within aperture 238 of seal member 88 of LRM connector 50. Generally a coaxial terminal presently commercially available today is large enough for only one to be secured in a housing insert restricted in dimension by the confines of the desired LRM assembly. While no alignment rib is possible with housing insert 136, the mating coaxial terminals 140,192 themselves have corresponding lead-in features for entering into mating engagement by aligning themselves which the alignable housing insert 136 of LRM connector 50 permits. The other end of coaxial cable 144 is appropriately terminated by a coaxial connector (not shown) electrically connected to circuit card 38 or 40. Optionally a triaxial signal terminal for a triaxial cable means may also be used if desired.

Similarly, Figure 11 shows power terminal 142 terminated to an end of a length of power cable 146 and secured by retention clip 292 within passageway 294 of housing insert 138 and aperture 238 of seal member 88 of LRM connector 50, with the other end of power cable 146 appropriately electrically connected to circuit card 38 or 40, which can thereby transmit electrical power such as at a level of 10 amperes or so for certain components within the LRM upon mating with a corresponding power terminal 194 of mother board connector 160.

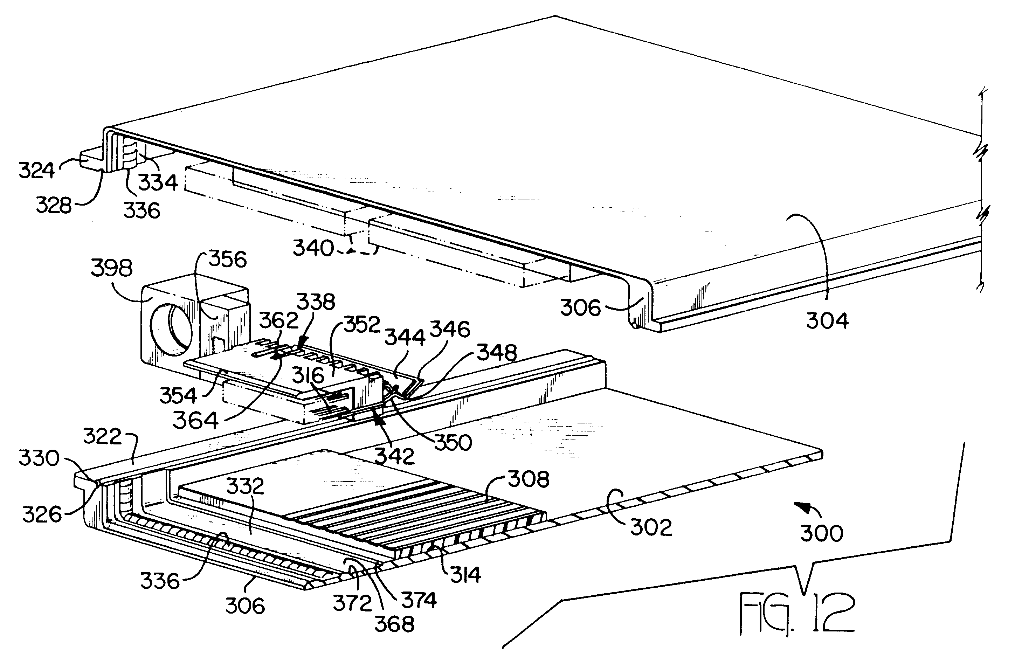

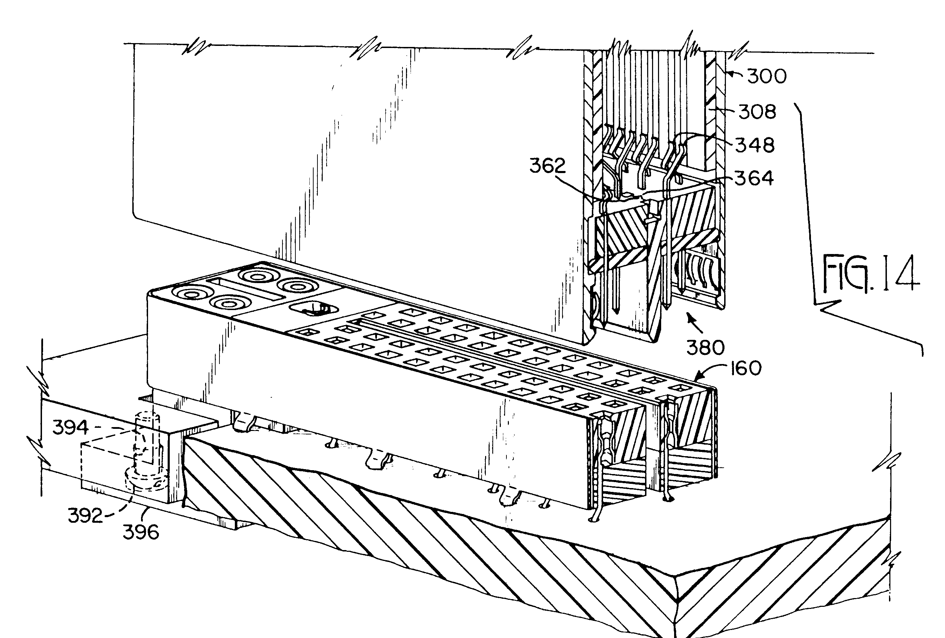

A second, preferred embodiment of the present invention is shown in Figures 12, 13 and 14. A different embodiment of LRM 300 is utilized comprising a pair of cover plates 302,304 such as of anodized aluminum which constitute the heat sink means of the LRM assembly. Near forward ends 306 thereof, circuit cards 308,310 are disposed securely on inside surfaces 312,314. Forward ends 306 of the two cover plates comprise the metal shroud for pin contact sections 316 of LRM connector 320, eliminating the separate metal shroud of the LRM connector 50 of the first embodiment. The elimination of the separate metal shroud also eliminates the necessity of sealing the joint between it and the cover plates of LRM 12 of Figure 2, and also eliminates the possibility of any discontinuity in shielding the LRM assembly against EMI possible at such a joint. It is preferred that peripheral mounting flanges 322,324 of cover plates 302,304 include opposed continuous grooves 326,328 within which is disposed an O-ring 330 of for example heat resistant fluorosilicone rubber which will seal the peripheral joint between the cover plates 302,304 when they are fastened together. Disposed around the interior surface 332,334 at the forward end of each cover plate 302,304 is an EMI spring strip 336; strips 336 together surround and engage the metal shroud of a mother board connector upon mating which could be identical to mother board connector 160 of Figure 4 above.

Terminal subassemblies 338,340 of terminals 342 are formed with bonded carrier strips 344,346 attached to free ends 348 of cantilever beams 350 until after soldering, as described hereinabove with respect to Figures 5 and 6. However, LRM assembly 300 eliminates the need for a forward housing member. Housing 352 of one of the pair of terminal subassemblies 338 molded to a two row array of terminals 342 associated with circuit card 308 of cover plate 302, can include alignment rib 354 and can also include at the ends thereof housing portions 356 for keys 358. Each of housings 352 and 360 of the pair of terminal subassemblies 338,340 can include one or more diamond-shaped projections 362 which enter correspondingly shaped grooves 364 of the other when the subassemblies have been mounted and the cover plates brought together for fastening, thus aligning the two arrays of pin contact sections 316 for mating with the receptacle contact sections 174 of mother board connector 160. Cover-proximate sides 366 of housings 352,360 preferably are dimensioned to be, or have portions formed to be, disposed within recesses 368 of respective cover plates 302,304 after cover plates 302,304 are fastened together and integral seal member 370 urged into place from forwardly thereof so that forward and rearward ends 372,374 of the recesses 368 define stop surfaces preventing significant axially rearward and forward movement of LRM connector housings 352,360 during mating and unmating respectively with mother board connector 160.

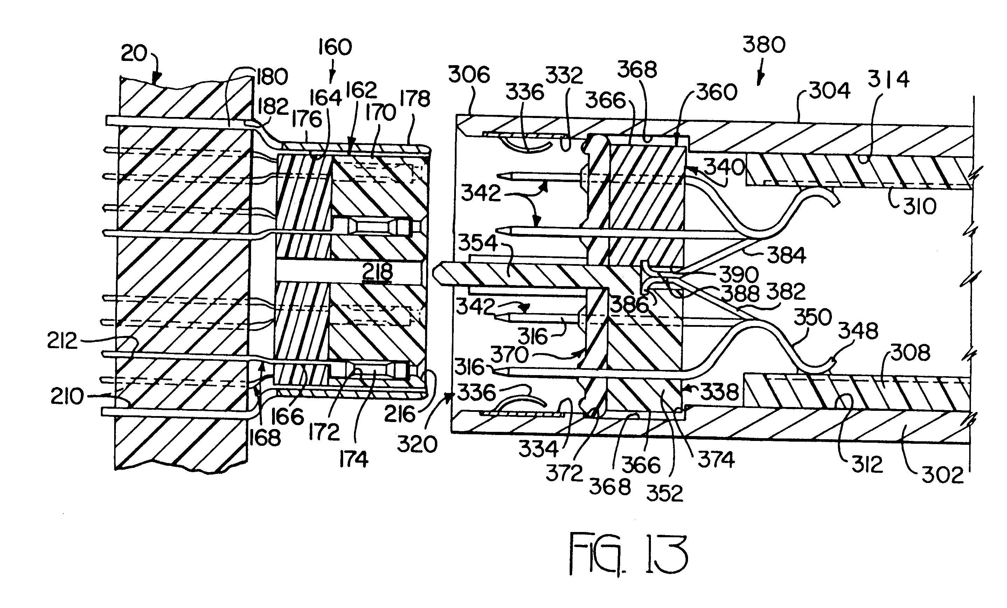

Referring to Figure 13, LRM connector assembly 380 can provide for direct electrical connection between a selected pair of opposed circuit paths of the opposed cards 308,310. One or more corresponding spring contacts 382,384 of each terminal subassembly 338,340 may be formed on carrier strip at a location not requiring a terminal, and each spring contact 382,384 has a card-remote free end 386 extending toward that of the opposing spring contact. The card-remote free end is generally convex with a flat contact portion 388 to electrically engage the other spring contact. Each of the molded housings 352,360 includes a corresponding channel 390 into which the respective free end 386 will be received and secured after being deflected under spring force upon being engaged by the free end of the opposing spring contact. Spring contacts 382,384 should be formed to extend slightly outwardly from housing channel 390 prior to complete assembly to assure engagement with the opposing spring contact and the generation of sufficient contact normal force.

Optical housing inserts are useful as with LRM connector of Figures 3 and 4, to provide for optical fiber terminal assemblies, coaxial or triaxial signal terminals and power terminals. As before, they may be separate members in the LRM connector separately alignable upon mating. It is possible, however, to float mount the housing inserts of the mother board connector by extending fastener 392 through an enlarged diameter mounting hole 394 through mounting flange 396, and then fixedly mount the housing inserts of the LRM connector to one or the other of the pair of cover plate assemblies. Then it is possible to mold housing insert portions 398 (Figure 12) of the LRM connector as part of the terminal subassemblies, forming integral housings and simplifying assembly of the LRM connector even further.

Advantages of the second embodiment are several. Elimination of the central heat sink plate member creates unencumbered space between cover plates for the use of components not so restricted in size as with LRM assembly of Figure 2, and similarly more space for various lengths of cable means for optical signal transmission, coaxial or triaxial signal transmission and power transmission to components within the LRM assembly. Thickening of cover plates is possible without increasing the weight of the LRM assembly, improving their functioning as heat sinks. Better sealing is possible between the cover plate joints, and better EMI shielding also results as aforesaid. If one of the pair of cover plates is damaged or ruined, or the connector half secured thereto, the other cover plate can be reused which is especially important considering the value of the circuit card and components secured thereto.

Other variations in the structure and method of assembly of the LRM connector assemblies of the present invention may be made which are within the scope of the claims.

## Claims

1. A connector assembly (16,18; 50, 160; 320 380) for interconnecting daughter cards (38,40,308,310) and mother board (20) of an electronic control unit (10), the control unit (10) being adapted to receive a plurality of modules (12;300) thereinto, wherein the daughter cards (38,40) are mounted to heat sink means (30; 302,304) of each module (12;300), each module (12;300) including conductive cover plates (22,24; 302,304) fastened thereto to protect and shield the module (12;300), and the module being movable during insertion into and removal from the control unit (10) along fixed guide channels (14) of the control unit perpendicular to the mother board (20) which is fixed to frame means (196) within the control unit (10), wherein a first connector (16;50,32;380) is mounted to a forward end of the module (12;300) and includes a first dielectric housing (56;352;360) which contains a plurality of first electrical contact terminals (52,54; 342) electrically connected by flexible rear contact sections (68,70) to respective conductive means (42) of said daughter cards (38,30; 308,310) within the module and a second connector (18;160) matable with the first connector (16;50; 320,380) being mounted in a fixed position on the mother board at an inner end of the guide channels (14) and including a second dielectric housing (162) which contains a like plurality of second electrical contact terminals (168) electrically connected to respective conductive means (212) of the mother board (20) and being matable with the first terminals (52,54;342), and the mother board being fixed in position within the control unit (10), and first and second shroud means (58;306;176) shielding the first and second connectors, respectively, with the first shroud means (58;306) defining a hood dimensioned so as to be larger than the second shroud about the second connector for mating receipt thereof, and the first and second shroud means being electrically interconnected upon mating of the first and second connectors, by ground contact means (114,118), wherein;
said first shroud means (58;306) is jointed to the cover plates (22,24; 302,304) of the module (12;300) at the forward end;
said first dielectric housing of said first connector (16;50; 320,380) is mounted to at least the cover plates (22,24; 302,304) of the module (12;300 in a manner permitting incremental lateral movement with respect thereto, and said first housing (56; 352,360) is disposed within said first shroud means (58;306) in a manner permitting incremental lateral movement within a peripheral space (224) along the inner surface (116; 312,314) of said first shroud means (58;306);
said second dielectric housing (162) of said second connector (18;306) is rigidly mounted to the mother board (20) and said second shroud means (176) around said second housing (162) is rigidly mounted to one of said second housing (162), said mother board (20) and said frame means (196) of the control unit (10);
said first shroud means (58;306) is dimensioned so as to be large enough relative to said second shroud means (176) to be adapted to receive said second shroud means (176) thereinto while being slightly off-center with respect thereto and yet enter into electrically grounding engagement therewith and peripherally therearound upon mating;
said first and second housings (56;352,360;162) include cooperating alignment means (120,218) for laterally aligning said first housing (56; 352,360) with respect to said second housing (162) during movement of the module (12;300) along the guide channels (14) of the control unit (10) toward and to the motherboard (20), and mating of said first and second connectors (16,18; 50,160; 320,380), said cooperating alignment means (120,218) being adapted to cooperatively engage and align said first housing (56; 352,360) with respect to said second housing prior to the meeting of leading ends of said first shroud and said second connector,
said first terminals (52,54;342) include rearward contact sections (68,70) joined to conductive pads (42) of a circuit card (38,40;308,310) within the module (12;300) and further include forward contact sections (62) matable with corresponding contact sections (174) of said second terminals (168), and are adapted to flex during alignment of said first housing (56;352;360) relative to said second housing (162) transmitting only minimal stress to the joints of said rearward contact sections (68,70) with said conductive pads (42), and
whereby the first and second housings become precisely aligned for the first and second terminals to electrically engage when the module moves toward and to the mother board, and the first and second shroud means groundingly engage to provide shielding.

2. A connector assembly as set forth in claim 1 further characterized in that a dielectric sealing member (88;370) is secured along and across the mating face (86) of the first housing (16;50;320;380) and includes a peripheral edge (240) maintaining sealing engagement with said first shroud means (58;306) before and after alignment.

3. A connector assembly as set forth in claim 1 further characterized in that said first housing (56;352,360) includes pairs of opposing mounting ears (102) extending rearwardly therefrom having aligned holes (104) therethrough alignable with corresponding holes (106) through the cover plates (22,24;302,304) through which are inserted pins (110) during assembly selected to fit tightly in said corresponding holes (106), and said aligned holes (104) of said mounting ears (102) have diameters larger than the diameter of said pins (110) permitting said mounting ears (102) to be incrementally movable both transversely with respect to said pins (110) and therealong thereby permitting said first housing (56; 352,360) to be moved incrementally with respect to the cover plates (22,24; 302,304) during connector alignment.

4. A connector assembly as set forth in claims 1 to 3, further characterized in that said first terminals (52,54;342) are grouped in two arrays each array being secured within a respective dielectric block (76,78; 352,360) and associated with daughter cards (38,40; 308,310) mounted on a respective one of the cover plates (22,24; 302,304), and said flexible rearward contact sections (68,70) of said first terminals (52,54; 342) of each array extend rearwardly of said dielectric block (76,78; 352,360) and are joined to conductive pads (42) of the associated daughter cards (38,40; 308,310), and forward contact sections (62) extending through passageways (82) of said first housing (56; 352,360) to be engaged by respective second terminals (168) during mating, whereby the elongated spring arms (46,66) permit lateral movement of the forward contact sections (62) during alignment without unduly stressing the electrical connections with the conductive pads (42) of the daughter cards (38,40; 308,310).

5. A connector assembly as set forth in claim 4 further characterized in that the module (12) includes a central heat sink plate (30) secured within and between the cover plates (22,24) thereof with the daughter cards (38,40) being mounted to the central heat sink plate (30) on both sides of the forward end (36) thereof, the connector assembly being further characterized in that said first housing (56) is mounted to the module (12) in a manner permitting lateral movement with respect to the central heat sink plate (30).

6. A connector assembly as set forth in claims 1 to 5 further characterized in that said first shroud means (58) is a separate conductive member including a rearwardly extending flange (94) adapted to be received within a flange-receiving recess at forward ends of the cover plates (22,24) and extending rearwardly along the inside surfaces (96,98) thereof during assembly, whereafter said shroud member (58) is bonded to the cover plates (22,24) in electrical engagement therewith.

7. A connector assembly as set forth in claims 1 to 4 further characterized in that said first shroud means (306) is an integral extension of said cover plates (302,304) extending forwardly of and enshrouding said first housing (352,360) and said first terminal forward contact sections (62).

8. A connector assembly as set forth in claims 1 to 7 further characterized in that said first and second connectors (16,18;50,160;320;380) include respectively first and second insert members (128,136,138;184,186,188) adjacent respective ends of said first and second housings (56;352,360;162) within said first and second shroud means (58;306;176), each said first and second insert member having at least one terminal-receiving passageway (130,130A,130B,288,294) therethrough within which a corresponding at least one first and second additional terminal (132,132A,132B,140,142;190,192,194) terminated to a transmission member of a corresponding cable means (134,144,146;204,206,208) is respectively securable, each said first insert member (128,136,138) being mounted to at least the cover plates (22,24;306) in a manner permitting incremental lateral movement with respect thereto and being dimensioned so that peripheral side surfaces thereof extend into said peripheral spacing (224) of said first shroud means (58;306) which permits incremental movement with respect thereto during alignment, and each said second insert member (184,186,188) being mounted to the frame means (196) of the control unit (10).

## Patentansprüche

1. Verbinderanordnung (16, 18; 50, 160; 320, 380) zum gegenseitigen Verbinden von Tochterkarten (38, 40, 308, 310) und Mutterplatten (20) einer elektronischen Steuereinheit (10), wobei die Steuereinheit (10) zur Aufnahme einer Vielzahl von Modulen (12; 300) geeignet ist, wobei die Tochterkarten (38, 40) an dem Kühlmittel (30; 302, 304) jedes Moduls (12; 300) angeordnet sind, jedes Modul (12; 300) über leitfähige Abdeckplatten (22, 24; 302, 304) verfügt, die dort befestigt sind, um das Modul (12; 300) zu schützen und abzuschirmen und das Modul während des Einsetzens in die Steuereinheit (10) und des Entfernens von dieser entlang fester Führungskanäle (14) der Steuereinheit rechtwinklig zu der Mutterplatte (20) bewegbar ist, die an einem Rahmeneinrichtung (196) innerhalb der Steuereinheit (10) befestigt ist, wobei ein erster Verbinder (16; 50, 32; 380) an einem vorderen Ende des Moduls (12; 300) angeordnet ist und ein erstes dielektrisches Gehäuse (56; 352; 360) aufweist, das eine Vielzahl erster elektrischer Kontaktanschlüsse (52, 54; 342) enthält, die über flexible, rückseitige Kontaktabschnitte (68, 70) an eine zugehörige leitfähige Einrichtung (42) der Tochterkarten (38, 30; 308, 310) innerhalb des Moduls elektrisch angeschlossen sind, und wobei ein zweiter Verbinder (18; 160) mit dem ersten Verbinder (16; 50; 320, 380) zusammenfügbar ist, der in einer festen Stellung an der Mutterplatte an einem inneren Ende der Führungskänale (14) angeordnet ist und ein zweites dielektrisches Gehäuse (162) aufweist, das eine gleiche Vielzahl zweiter elektrischer Kontaktanschlüsse (168) enthält, die an eine zugehörige leitfähige Einrichtung (212) der Mutterplatte (20) elektrisch angeschlossen sind und mit dem ersten Anschlüssen (52, 54; 342) zusammenfügbar sind, und wobei die Mutterplatte in einer Stellung innerhalb der Steuereinheit (10) befestigt ist und ein erstes und ein zweites Abschirmmittel (58; 306; 176) den ersten bzw. den zweiten Verbinder abschirmen, wobei das erste Abschirmmittel (58; 306), das einen Hut bildet, so bemessen ist, daß es größer als die zweite Abschirmung um den zweiten Verbinder zur fügenden Aufnahme desselben ist und die ersten und die zweiten Abschirmmittel beim Zusammenfügen des ersten und des zweiten Verbinders über eine Massekontakteinrichtung (114, 118) elektrisch miteinander verbunden sind, wobei
das erste Abschirmmittel (58; 306) mit den Abdeckplatten (22, 24; 302, 304) des Moduls (12; 300) an dem vorderen Ende verbunden ist,
das erste dielektrische Gehäuse des ersten Verbinders (16; 50; 320, 380) an mindestens den Abdeckplatten (22, 24; 302, 304) des Moduls (12; 300) in einer Weise angeordnet ist, die eine zusätzliche seitliche Bewegung hierzu gestattet, und das erste Gehäuse (56; 352, 360) innerhalb des ersten Abschirmmittels (58; 306) in einer solchen Weise angeordnet ist, die eine zusätzliche seitliche Bewegung innerhalb eines peripheren Raums (224) entlang der inneren Oberfläche (116; 312, 314) des ersten Abschirmmittels (58; 306) gestattet,
das zweite dielektrische Gehäuse (162) des zweites Verbinders (18, 306) an der Mutterplatte (20) statt angeordnet ist und das zweite Abschirmmittel (176) rund um das zweite Gehäuse (162) an dem zweiten Gehäuse (162), der Mutterplatte (20) oder dem Rahmen (196) der Steuereinheit (10) starr angeordnet ist,
das erste Abschirmmittel (58; 306) so bemessen ist, daß es hinsichtlich des zweiten Abschirmmittels (176) groß genug ist, daß es das zweite Abschirmmittel (176) aufnehmen kann, während es etwas hinsichtlich desselben versetzt ist und daß es damit und umfangseitig rundherum beim Zusammenfügen in elektrischen Masseeingriff eintreten kann,
das erste und das zweite Gehäuse (56; 352, 360; 162) zusammenarbeitende Ausrichtmittel (120, 218) zum seitlichen Ausrichten des ersten Gehäuses (56; 352, 360) hinsichtlich des zweiten Gehäuses (162) während der Bewegung des Moduls (12; 300) entlang der Führungskanäle (14) der Steuereinheit (10) in Richtung auf die Mutterplatte (20) und zu dieser hin und zum Zusammenfügen des ersten und des zweiten Verbinders (16, 18; 50, 160; 320, 380) aufweisen, wobei die zusammenarbeitenden Ausrichtmittel (120, 218) zum zusammenarbeitenden Erfassen und Ausrichten des ersten Gehäuses (56; 352, 360) hinsichtlich des zweiten Gehäuses vor dem Zusammentreffen der vorderen Enden der ersten Abschirmung und des zweiten Verbinders geeignet sind,
die ersten Anschlüsse (52, 54; 342) rückwärtige Kontaktabschnitte (68, 70) aufweisen, die mit leitfähigen Flächenelemente (42) einer Schaltungskarte (38, 40; 308, 310) innerhalb des Moduls (12; 300) in Verbindung stehen, und weiter vordere Kontaktabschnitte (62) aufweisen, die mit entsprechenden Kontaktabschnitten (174) der zweiten Anschlüsse (168) zusammenfügbar sind und sich während des Ausrichtens des ersten Gehäuses (56; 352; 360) hinsichtlich des zweiten Gehäuses (162) zu verbiegen in der Lage sind, wobei lediglich minimale Beanspruchungen auf die Verbindungen der rückwärtigen Kontaktabschnitte (68, 70) mit den leitfähigen Flächenelementen (42) übertragen werden, und
wodurch das erste und das zweite Gehäuse für die ersten und die zweiten Anschlüsse genau ausgerichtet werden, um dann, wenn sich das Modul in Richtung auf die Mutterplatte und zu dieser hin bewegt, elektrisch zum Eingriff zu kommen und das erste und das zweite Abschirmmittel zur Bildung einer Abschirmung zum Masseeingriff zu bringen.

2. Verbinderanordnung nach Anspruch 1, weiter **dadurch gekennzeichnet,** daß ein dielektrisches Abdichtteil (88; 370) entlang und über der Fügefläche (86) des ersten Gehäuses (16; 50; 320; 380) befestigt ist und einen peripheren Rand (240) aufweist, der einen abdichtenden Eingriff mit dem ersten Abschirmmittel (58; 306) vor und nach dem Ausrichten aufrechthält.

3. Verbinderanordnung nach Anspruch 1, weiter **dadurch gekennzeichnet,** daß das erste Gehäuse (56; 352, 360) Paare einander gegenüberliegender Anbauohren (102) aufweist, die sich von dort nach hinten erstrecken und fluchtende Löcher (104) aufweisen, die mit entsprechenden Löchern (106) in den Abdeckplatten (22, 24; 302, 304) zur Fluchtung bringbar sind, durch die Zapfen (110) während des Zusammenbaus eingesetzt werden, die in Hinblick auf einen engen Paßsitz in den entsprechenden Löchern (106) ausgewählt sind, und daß die fluchtenden Löcher (104) der Anbauohren (102) einen Durchmesser aufweisen größer als der Durchmesser der Zapfen (110), was es gestattet, daß die Anbauohren (102) zusätzlich sowohl quer hinsichtlich der Zapfen (110) als auch längs derselben bewegbar sind, was es gestattet, daß das erste Gehäuse (56; 352, 360) zusätzlich hinsichtlich der Abdeckplatten (22, 24; 302, 304) während der Verbinderausrichtung bewegt werden.

4. Verbinderanordnung nach Anspruch 1 - 3, weiter **dadurch gekennzeichnet,** daß die ersten Anschlüsse (52, 54; 342) in zwei Reihen gruppiert sind, wobei jede Reihe innerhalb eines zugehörigen dielektrischen Bocks (76, 78; 352, 360) festgelegt ist und mit Tochterkarten (38, 40; 308, 310) in Verbindung steht, die an einer jeweiligen der Abdeckplatten (22, 24; 302, 304) angeordnet sind, und daß sich die flexiblen, rückwärtigen Kontaktabschnitte (68, 70) der ersten Anschlüsse (52, 54; 342) jeder Reihe von dem dielektrischen Block (76, 78; 352, 360) aus nach hinten erstrecken und an leitfähigen Flächenelementen (42) der verbundenen Tochterkarten (38, 40; 308, 310) angeschlossen sind und daß sich die vorderen Kontaktabschnitte (62) durch Durchtrittskanäle (82) des ersten Gehäuses (56; 352, 360) erstrecken, um von zugehörigen zweiten Anschlüssen (168) während des Zusammenfügens erfaßt zu werden, wobei die länglichen Federarme (46, 66) eine seitliche Bewegung der vorderen Kontaktabschnitte (62) während der Ausrichtung ohne übermäßige Beanspruchung der elektrischen Verbindungen mit den leitfähigen Flächenelementen (42) der Tochterkarten (38, 40; 308, 310) gestatten.

5. Verbinderanordnung nach Anspruch 4, weiter **dadurch gekennzeichnet,** daß das Modul (12) eine zentrale Kühlplatte (30) aufweist, die innerhalb und zwischen den Abdeckplatten (22, 24) befestigt ist, wobei die Tochterkarten (38, 40) an der zentralen Kühlplatte (30) zu beiden Seiten des vorderen Endes (36) desselben angeordnet sind, wobei die Verbinderanordnung weiter **dadurch gekennzeichnet** ist, daß das erste Gehäuse (56) an dem Modul (12) in einer Weise angeordnet ist, die eine seitlich Bewegung hinsichtlich der zentralen Kühlplatte (30) gestattet.

6. Verbinderanordnung nach Anspruch 1 - 5, weiter **dadurch gekennzeichnet,** daß das erste Abschirmmittel (58) ein separates leitfähiges Teil ist, das einen sich rückwärts erstreckenden Flansch (94) aufweist, der zur Aufnahme innerhalb einer flanschaufnehmenden Aussparung an den vorderen Enden der Abdeckplatten (22, 24) geeignet ist und sich entlang der inneren Flächen (96, 98) derselben während der Montage erstreckt, wonach das Abschirmteil (58) an den Abdeckplatten (22, 24) in elektrischem Eingriff mit diesen angeklebt angeklebt wird.

7. Verbinderanordnung nach Anspruch 1 - 4, weiter **dadurch gekennzeichnet,** daß das erste Abschirmmittel (306) eine einstückige Verlängerung der Abdeckplatten (302, 304) ist, die sich von dem ersten Gehäuse (352, 360) aus nach vorn erstreckt und dieses und die vorderen Kontaktabschnitte (62) der ersten Anschlüsse abschirmt.

8. Verbinderanordnung nach Anspruch 1 - 7, weiter **dadurch gekennzeichnet,** daß der erste und der zweite Verbinder (16, 18; 50, 160; 320; 380) jeweilige erste und zweite Einsetzteile (128, 136, 138; 184, 186, 188) in der Nähe der jeweiligen Enden des ersten und des zweiten Gehäuses (56; 352, 360; 162) innerhalb des ersten und des zweiten Abschirmmittels (58; 306; 176) aufweisen, wobei jedes erste und zweite Einsetzteil mindestens einen Anschlußaufnahme-Durchtrittskanal (130, 130A, 130B, 288, 294) aufweist, innerhalb dessen ein entsprechender mindestens ein erster und ein zweiter zusätzlicher Anschluß (132, 132A, 132B, 140, 142; 190, 192, 194), der an ein Übertragungsteil eines entsprechenden ersten Kabels (134, 144, 146; 204, 206, 208) angeschlossen ist, befestigbar ist, wobei jedes erstes Einsetzteil 128, 136, 138) an mindestens den Abdeckplatten (22, 24; 306) in einer Weise angeordnet ist, die eine zusätzliche seitliche Bewegung hierzu gestattet, und das so bemessen ist, daß sich die peripheren seitlichen Oberflächen desselben in einen peripheren Raum (224) des ersten Abschirmmittels (58; 306) erstrecken, was eine zusätzliche Bewegung hierzu während der Ausrichtung gestattet, und wobei jedes zweites Einsetzteil (184, 186, 188) an dem Rahmen (196) der Steuereinheit (10) angeordnet ist.

## Revendications

1. Assemblage de connecteur (16, 18 ; 50, 160 ; 320, 380) pour interconnecter des cartes-filles (38, 40, 308, 310) et une plaquette-mère (20) d'une unité électronique de commande (10), l'unité de commande (10) étant conçue pour recevoir en elle plusieurs modules (12 ; 300), les cartes-filles (38, 40) étant montées sur des moyens à radiateur thermique (30 ; 302, 304) de chaque module (12 ; 300), chaque module (12 ; 300) comprenant des plaques conductrices (22, 24 ; 302, 304) de capot fixées à ce module pour protéger et blinder le module (12 ; 300), et le module pouvant être déplacé, lorsqu'il est inséré dans l'unité de commande (10) et qu'il en est retiré, le long de rainures fixes (14) de guidage de l'unité de commande perpendiculaires à la plaquette-mère (20) qui est fixée à un moyen de bâti (196) à l'intérieur de l'unité de commande (10), un premier connecteur (16 ; 50, 32 ; 380) étant monté sur une extrémité avant du module (12 ; 300) et comprenant un premier boîtier diélectrique (56 ; 352 ; 360) qui contient plusieurs bornes de contact électriques (52, 54 ; 342) connectées électriquement par des sections de contact arrière flexibles (68, 70) à des moyens conducteurs respectifs (42) desdites cartes-filles (38, 30 ; 308, 310) à l'intérieur du module et un second connecteur (18 ; 160), qui peut être accouplé avec le premier connecteur (16 ; 50 ; 320, 380), étant monté dans une position fixe sur la plaquette-mère à une extrémité intérieure des rainures de guidage (14) et comprenant un second boîtier diélectrique (162) qui contient un nombre identique de secondes bornes de contact électriques (168) connectées électriquement à des moyens conducteurs respectifs (212) de la plaquette-mère (20) et pouvant être accouplées avec les premières bornes (52, 54 ; 342), et la plaquette-mère étant fixée en position à l'intérieur de l'unité de commande (10), et des premier et second moyens de coquille (58 ; 306 ; 176) blindant les premier et second connecteurs, respectivement, le premier moyen de coquille (58 ; 306) définissant une enveloppe dimensionnée de façon à être plus grande que la seconde coquille autour du second connecteur pour la recevoir en accouplement, et les premier et second moyens de coquille étant interconnectés électriquement à la suite d'un accouplement des premier et second connecteurs, par des moyens de contact de masse (114, 118), assemblage de connecteurs dans lequel :
ledit premier moyen de coquille (58 ; 306) est relié aux plaques de capot (22, 24 ; 302, 304) du module (12 ; 300) à l'extrémité avant ;
ledit premier boîtier diélectrique dudit premier connecteur (16 ; 50 ; 320, 380) est monté sur au moins les plaques de capot (22, 24 ; 302, 304) du module (12 ; 300) d'une manière permettant un mouvement latéral progressif par rapport à elles, et ledit premier boîtier (56 ; 352, 360) est disposé à l'intérieur dudit premier moyen de coquille (58 ; 306) d'une manière permettant un mouvement latéral progressif à l'intérieur d'un espace périphérique (224) le long de la surface intérieure (116 ; 312, 314) dudit premier moyen de coquille (58 ; 306) ;
ledit second boîtier diélectrique (162) dudit second connecteur (18 ; 306) est monté rigidement sur la plaquette-mère (20) et ledit second moyen de coquille (176) autour dudit second boîtier (162) est monté rigidement sur l'une des pièces constituées par ledit second boîtier (162), ladite plaquette-mère (20) et ledit moyen de bâti (196) de l'unité de commande (10) ;
ledit premier moyen de coquille (58 ; 306) est dimensionné de façon à être assez grand par rapport audit second moyen de coquille (176) pour être apte à recevoir en lui ledit second moyen de coquille (176) tout en étant légèrement décentré par rapport à lui et tout en entrant en engagement de mise à la masse électrique avec lui et le long de sa périphérie à la suite de l'accouplement ;
lesdits premier et second boîtiers (56 ; 352, 360 ; 162) comprennent des moyens d'alignement coopérants (120, 218) pour aligner latéralement ledit premier boîtier (56 ; 352, 360) par rapport audit second boîtier (162) durant un mouvement du module (12 ; 300) le long des rainures de guidage (14) de l'unité de commande (10) vers et jusqu'à la plaquette-mère (20), et un accouplement desdits premier et second connecteurs (16, 18 ; 50, 160 ; 320, 380), lesdits moyens d'alignement coopérants (120, 218) étant aptes à engager et aligner en coopération ledit premier boîtier (56 ; 352, 360) par rapport audit second boîtier avant d'atteindre les extrémités avant de ladite première coquille et dudit second connecteur,
lesdites premières bornes (52, 54 ; 342) comprennent des sections de contact arrière (68, 70) reliées à des plots conducteurs (42) d'une carte à circuit (38, 40 ; 308, 310) à l'intérieur du module (12 ; 300) et comprennent en outre des sections de contact avant (62) pouvant être accouplées avec des sections de contact correspondantes (174) desdites secondes bornes (168), et sont aptes à fléchir durant un alignement dudit premier boîtier (56 ; 352 ; 360) par rapport audit second boîtier (162) transmettant seulement une contrainte minimale aux joints desdites sections de contact arrière (68, 70) avec lesdits plots conducteurs (42), et
grâce à quoi les premier et second boîtiers viennent s'aligner avec précision pour que les premières et secondes bornes s'engagent électriquement lorsque le module se déplace vers et jusqu'à la plaquette-mère, et les premier et second moyens de coquille établissent un engagement de mise à la masse pour réaliser un blindage.

2. Assemblage de connecteur selon la revendication 1, caractérisé en outre en ce qu'un élément diélectrique d'étanchéité (88 ; 370) est fixé le long de et à travers la face d'accouplement (86) du premier boîtier (16 ; 50 ; 320 ; 380) et comporte un bord périphérique (240) maintenant un engagement d'étanchéité avec ledit premier moyen de coquille (58 ; 306) avant et après l'alignement.

3. Assemblage de connecteur selon la revendication 1, caractérisé en outre en ce que ledit premier boîtier (56 ; 352, 360) comporte des paires de pattes opposées (102) de montage qui en font saillie vers l'arrière, traversées par des trous alignés (104) pouvant être alignés avec des trous correspondants (106) traversant les plaques de capot (22, 24 ; 302, 304), dans lesquels sont insérées, durant l'assemblage, des goupilles (110) choisies pour s'ajuster étroitement dans lesdits trous correspondants (106), et lesdits trous alignés (104) desdites pattes de montage (102) ont des diamètres supérieurs au diamètre desdites goupilles (110), permettant auxdites pattes de montage (102) d'être déplacées progressivement à la fois transversalement par rapport auxdites goupilles (110) et le long de celles-ci, permettant ainsi audit premier boîtier (56 ; 352, 360) d'être déplacé progressivement par rapport aux plaques (22, 24 ; 302, 304) de capot durant un alignement des connecteurs.

4. Assemblage de connecteur selon les revendications 1 à 3, caractérisé en outre en ce que lesdites premières bornes (52, 54 ; 342) sont groupées en deux ensembles, chaque ensemble étant fixé à l'intérieur d'un bloc diélectrique respectif (76, 78 ; 352, 360) et associé à des cartes-filles (38, 40 ; 308, 310) montées sur l'une, respective, des plaques de capot (22, 24 ; 302, 304), et lesdites sections de contact arrière flexibles (68, 70) desdites premières bornes (52, 54 ; 342) de chaque ensemble s'étendent vers l'arrière dudit bloc diélectrique (76, 78 ; 352, 360) et sont jointes à des plots conducteurs (42) des cartes-filles associées (38, 40 ; 308, 310), et des sections de contact avant (62) s'étendant dans des passages (82) dudit premier boîtier (56 ; 352, 360) pour être engagées par des secondes bornes respectives (168) durant un accouplement, grâce à quoi les lames à ressort allongées (46, 66) permettent un mouvement latéral des sections de contact avant (62) durant un alignement sans appliquer une contrainte excessive aux connexions électriques avec les plots conducteurs (42) des cartes-filles (38, 40 ; 308, 310).

5. Assemblage de connecteur selon la revendication 4, caractérisé en outre en ce que le module (12) comporte une plaque centrale (30) de radiateur thermique fixée à l'intérieur de et entre les plaques (22, 24) de capot de ce module, les cartes-filles (38, 40) étant montées sur la plaque centrale (30) de radiateur thermique sur les deux côtés de son extrémité avant (36), l'assemblage de connecteur étant en outre caractérisé en ce que ledit premier boîtier (56) est monté sur le module (12) d'une manière permettant un mouvement latéral par rapport à la plaque centrale (30) de radiateur thermique.

6. Assemblage de connecteur selon les revendications 1 à 5, caractérisé en outre en ce que ledit premier moyen de coquille (58) est un élément conducteur séparé comprenant un rebord (94) s'étendant vers l'arrière, apte à être reçu dans un évidement de réception de rebord à des extrémités avant des plaques (22, 24) de capot et s'étendant vers l'arrière le long des surfaces intérieures (96, 98) de celles-ci durant l'assemblage, après quoi ledit élément de coquille (58) est lié aux plaques (22, 24) de capot en engagement électrique avec elles.

7. Assemblage de connecteur selon les revendications 1 à 4, caractérisé en outre en ce que ledit premier moyen de coquille (306) est une saillie intégrée desdites plaques (302, 304) de capot s'étendant vers l'avant de et enveloppant ledit premier boîtier (352, 360) et lesdites sections de contact avant (62) des premières bornes.

8. Assemblage de connecteur selon les revendications 1 à 7, caractérisé en outre en ce que lesdits premier et second connecteurs (16, 18 ; 50, 160 ; 320 ; 380) comprennent des premier et second éléments rapportés (128, 136, 138 ; 184, 186, 188), respectivement, adjacents à des extrémités respectives desdits premier et second boîtiers (56 ; 352, 360 ; 162) à l'intérieur desdits premier et second moyens de coquille (58 ; 306 ; 176), chacun desdits premier et second éléments rapportés étant traversé par au moins un passage (130, 130A, 130B, 288, 294) de réception de borne à l'intérieur duquel au moins l'une, correspondante, de premières et secondes bornes supplémentaires (132, 132A, 132B, 140, 142 ; 190, 192, 194), terminant un élément de transmission d'un moyen à câble correspondant (134, 144, 146 ; 204, 206, 208), peut, respectivement, être fixée, chaque premier élément rapporté (128, 136, 138) étant monté sur au moins les plaques de capot (22, 24 ; 306) d'une manière permettant un mouvement latéral progressif par rapport à elles et étant dimensionné de façon que des surfaces latérales périphériques de cet élément pénètrent dans ledit espace périphérique (224) dudit premier moyen de coquille (58 ; 306), ce qui permet un mouvement progressif par rapport à lui durant un alignement, et chaque second élément rapporté (184, 186, 188) étant monté sur le moyen de bâti (196) de l'unité de commande (10).
